# EUROPÄISCHE PATENTSCHRIFT

(11) **EP 1 001 905 B1**
(45) Veröffentlichungstag und Bekanntmachung des Hinweises auf die Patenterteilung: **02.01.2003**
(21) Anmeldenummer: 98948708.7
(22) Anmeldetag: 03.08.1998
(51) Int. Cl.: B65D 51/16, H01G 9/12, H01M 2/12

(54) **DICHTUNGSVENTIL**
SEALING VALVE
CLAPET D'ETANCHEITE

(30) Priorität: 06.08.1997 DE 29714031 U
(43) Veröffentlichungstag der Anmeldung: 24.05.2000
(73) Patentinhaber: Busak + Shamban GmbH, 70565 Stuttgart (DE)
(72) Erfinder: SCHOLLENBERGER, Gerd, D-74372 Sersheim (DE); BAUER, Jürgen, D-72076 Tübingen (DE); SCHÖCK, Thomas, D-71272 Renningen (DE)
(74) Vertreter: KOHLER SCHMID + PARTNER
(86) Internationale Anmeldenummer: DE9802218
(87) Internationale Veröffentlichungsnummer: WO99007617

(56) Entgegenhaltungen:
- EP-A- 0 193 508
- EP-A- 0 661 218
- AT-B- 329 123
- DE-A- 4 135 711
- US-A- 4 075 399
- US-A- 4 442 184

## Beschreibung

Die vorliegende Erfindung betrifft ein Dichtungsventil aus gummielastischem Material für Behälteröffnungen, mit einem Stopfenteil, das in die Behälteröffnung bis zu einem das Stopfenteil in radialer Richtung überragenden Stopfenkragen einführbar ist, wobei an dem Stopfenteil mindestens ein Steuerkanal ausgebildet ist, der sich von einer Unterseite des Stopfenteils in Längsrichtung des Dichtungsventils bis zum Stopfenkragen erstreckt.

Ein derartiges Dichtungsventil ist aus der DE 41 35 711 C2 bekanntgeworden.

Zellen von Akkumulatorbatterien benötigen ein Dichtungsventil, welches das Austreten von Batteriesäure und H₂-Gas bei normalen Druckverhältnissen sicher verhindert, sich bei definierten Überdrücken innerhalb der Batteriezelle öffnet und eine Entgasung gestattet. Solche Akkumulatorbatterien, insbesondere Bleiakkumulatoren für Kraftfahrzeuge, sind Massenartikel, deren Dichtungsventile möglichst kostengünstig hergestellt werden müssen.

Bei dem bekannten Dichtungsventil wird durch den Steuerkanal ein definierter Strömungsweg für Fluide bereitgestellt, der an einem Dichtungswulst endet. Aus diesem Grund wird eine definierte Druckbeaufschlagung dieser Soll-Entgasungsstelle möglich. Daraus resultiert ein verbessertes, kontrollierteres und feinfühligeres Ansprechverhalten.

In der AT-B-329 123 ist ein Dichtungsventil für Akkumulatorbatterien beschrieben, das eine andere technische Lehre zur Entgasung der Akkumulatorbatterie vorschlägt. Im Montagezustand ist ein Ringspalt zwischen einem Rohrstutzen und einem Stopfenkörper ausgebildet. Eine Entgasungsöffnung verbindet den Ringspalt mit dem Außenraum außerhalb der Akkumulatorbatterie. Der Ringspalt ist in einzelne über Durchtrittsausnehmungen in Verbindung stehende Kammern unterteilt, so daß Elektrolytpartikel an den Wandflächen der Kammern abgeschieden werden können und so am Austritt gehindert werden.

Der Stopfenkragen des aus der DE 41 35 711 C2 bekannten Dichtungsventils liegt mit seiner nahezu gesamten Kragenunterseite auf einem Behälterrand auf. Infolge dieser ausgeprägten Kontaktfläche kann der Stopfenkragen auf dem Behälterrand verkleben. Die Funktionsweise des stopfenförmigen bekannten Dichtungsventils ist daher beeinträchtigt und unterliegt Schwankungen.

Aus diesem Grund wird das aus der DE 41 35 711 C2 bekannte Dichtungsventil vorzugsweise als Dichtungskappe gefertigt, da in diesem Fall der Dichtungswulst umlaufend auf der Auβenfläche des Behälterstutzens dichtend anliegt und der Steuerkanal am Dichtungswulst endet.

Nachteiligerweise treten bei der Fertigung der aus der DE 41 35 711 C2 bekannten Dichtungskappe als Massenartikel Probleme auf. Die Formtrennung des Dichtungsventilen ist erschwert, weil der Dichtungswulst das Formteil hintergreift. Das Abziehen des gefertigten Dichtungsventils von dem Formteil ist daher nur erschwert möglich.

Der vorliegenden Erfindung liegt daher das technische Problem zugrunde, das aus der DE 41 35 711 C2 bekannte Dichtungsventil derart weiterzuentwickeln, daß ein sicheres Entgasen bei gleichzeitiger Dichtheit gegen Austreten der Batterieflüssigkeit gewährleistet ist und gleichzeitig eine kostengünstige Herstellung bei großer Ausbeute erreichbar wird.

Dieses Problem wird erfindungsgemäß dadurch gelöst, daß an den Stopfenkragen ein Dichtungswulst angeformt ist, der auf einen die Behälteröffnung umschließenden Behälterrand dichtend auflegbar ist, und daß der Stopfenkragen einen Steuerkanalabschnitt aufweist, der quer zu dem Steuerkanal des Stopfenteils verläuft und diesen Steuerkanal bis zu dem Dichtungswulst fortsetzt.

Das erfindungsgemäße Dichtungsventil kann einfach in die Behälteröffnung eingesteckt werden, so daß der Dichtungswulst auf dem Behälterrand aufliegt. Der Stopfenkragen mit dem daran ausgebildeten Dichtungswulst verhindert, daß das Dichtungsventil zu weit in die Behälteröffnung eingeschoben wird. Dabei kommt der Dichtungswulst am Behälterrand zur Anlage, so daß eine gute Abdichtung des Behälterinnenraums gewährleistet ist. Durch die Fortführung des in Längsrichtung verlaufenden Steuerkanals in radialer Richtung wird eine bestimmte Stelle des Dichtungswulstes definiert druckbeaufschlagt. Die definierte Strömungsführung zum Dichtungswulst gewährleistet, daß das stopfenartige Dichtungsventil in reproduzierbarer Weise eine Entgasung aus dem Behälterinnenraum ermöglicht. Verklebungen und Verpressungen des Stopfenkragens, die diese Funktionsweise beeinträchtigen, können verhindert werden.

Zur definierten Ausbildung des Ansprechverhaltens des Dichtungsventils kommen als Parameter in Betracht: Die Abmessungen des an dem Stopfenkragen anliegenden Dichtungswulstes, die Steifigkeit des Materials und die Querschnittsfläche des Steuerkanals.

Bei einer bevorzugten Ausführungsform weist der Dichtungswulst mindestens eine ausgeprägte Dichtungskante auf. Durch die Ausbildung einer Dichtungskante reduziert sich die Dichtungsfläche auf eine Dichtungslinie, die besonders feinfühlig und definiert auf Druckänderungen innerhalb des Steuerkanals reagieren kann. Ferner werden die zwischen der Anlagefläche des Behälterrands und der Dichtkante auftretenden Adhäsionskräfte vermieden, die eine sichere Entgasung gefährden können.

Es können auch mehrere in radialer Richtung hintereinander geschaltete Dichtkanten vorgesehen sein, um die Abdicht-Sicherheit zu verbessern. Durch die Bereitstellung mehrerer möglicher Dichtkanten kann das erfindungsgemäße Dichtungsventil aber auch auf Behälteröffnungen aufgesteckt werden, bei denen die Wandstärke des Behälterstutzens Schwankungen unterliegt. Jeweils eine der möglichen Dichtkanten kann dann auf dem Behälterrand aufliegen, um die Funktionsweise des Dichtungsventils zu ermöglichen.

Bei einer weiteren Ausführungsform ist an der dem Behälter abgewandten Außenoberfläche des Stopfenteils ein Federelement vorgesehen. Das Federelement kann Toleranzen zwischen dem Dichtungsventil und einer über dem Dichtungsventil angeordneten Batterieabschlußplatte ausgleichen. Das Federelement wird von der Batterieabschlußplatte druckbeaufschlagt, so daß das Stopfenteil in die Behälteröffnung derart eingedrückt wird, daß der Dichtungswulst auf dem Behälterrand angepreßt ist. Unterschiedliche Abstände zwischen Batterieabschlußplatte und Stopfenteil werden überbrückt. Vorzugsweise ist das Federelement mittig bzw. symmetrisch zentral angeordnet. Durch die Druckbelastung des Federelements in Längsrichtung des Dichtungsventils kann die Kraft auf das Stopfenteil und den Dichtungswulst gleichmäßig übertragen werden. Die Öffnungs- und Schließfunktion des Dichtungsventils wird daher noch reproduzierbarer.

Bei einer ersten Realisierung dieser Ausführungsform besteht das Federelement aus einem gummielastischen Material und/oder ist einstückig an dem Stopfenteil angeformt. Das Federelement kann an dem Stopfenteil integriert ausgebildet sein, so daß ein separates, externes Federelement nicht verwendet werden muß. Das Federelement ist bereits im gefertigten Zustand vorhanden und an der optimalen Stelle für eine Krafteinleitung plaziert.

Bei einer zweiten Realisierung ist es aber auch möglich, als Federelement eine Schraubenfeder zu verwenden. Aus diesem Grund kann je nach Abstand zwischen Batterieabschlußplatte und Stopfenteil entschieden werden, ob ein separates Federelement (Schraubenfeder) und mit welcher Federgröße eingesetzt werden soll. Aus diesem Grund kann je nach Verwendungszweck die Druckbelastung des Dichtungswulstes am Behälterrand individuell eingestellt werden.

Bei einer weiteren Variante der Erfindung sind an der Außenumfangsfläche des Stopfenteils vorstehende Noppen vorgesehen. Die Noppen ermöglichen es, in entsprechende Ausnehmungen an der Innenseite der Behälteröffnung einzugreifen bzw. einzurasten. Das Dichtungsventil ist dann in der Behälteröffnung ortsfest fixiert und gehalten. Durch die Noppen kann aber auch erreicht werden, daß die Außenumfangsfläche des Stopfenteils von der Innenseite der Behälteröffnung beabstandet ist, um einen Steuerkanal auszubilden.

Prinzipiell sind alle gummielastischen Werkstoffe zur Herstellung des erfindungsgemäßen Dichtungsventils geeignet. Bevorzugt werden jedoch beispielsweise Fluorelastomere FPM, FKM sowie auch Siliconkautschukmaterialien verwendet.

Weitere Merkmale und Vorteile der Erfindung ergeben sich aus der nachfolgenden Beschreibung eines Ausführungsbeispiels der Erfindung, anhand der Zeichnung, die erfindungswesentliche Einzelheiten zeigt, und aus den Ansprüchen. Die einzelnen Merkmale könne je einzeln für sich oder zu mehreren in beliebiger Kombination bei einer Ausführungsform der Erfindung verwirklicht sein. Es zeigt:
- **Fig. 1**: eine Ansicht der Unterseite eines erfindungsgemäßen Dichtungsventils;
- **Fig. 2**: einen Querschnitt des erfindungsgemäßen Dichtungsventils nach Fig. 1, das auf einen Behälter aufgesteckt ist.

Die Erfindung ist in den Figuren schematisch dargestellt, so daß die wesentlichen Merkmale der Erfindung gut zu erkennen sind. Die Darstellungen sind nicht notwendigerweise maßstäblich zu verstehen.

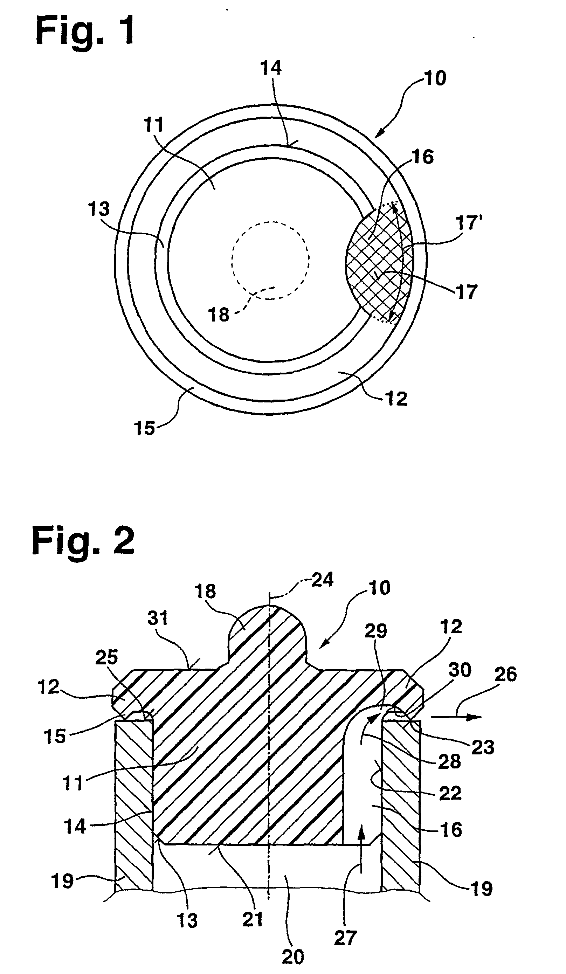

**Fig. 1** zeigt ein Dichtungsventil 10, das aus einem zentral angeordneten Stopfenteil 11 und einem sich daran anschließenden Stopfenkragen 12 aufgebaut ist.

Das Stopfenteil 11 kann in eine Behälteröffnung eingesteckt werden, auf dessen Behälteröffnung das Stopfenteil 11 abgestimmt ist. Das Stopfenteil 11 geht über eine Schrägfläche 13 in seine Außenumfangsfläche 14 über, die im eingesteckten Zustand des Dichtungsventils 10 an einer Behälterinnenseite (siehe Fig. 2) anliegt. Die Schrägfläche 13 ermöglicht es, ein mit einem geringen Übermaß zur Behälteröffnung gefertigtes Stopfenteil 11 in eine Behälteröffnung leicht angepreßt hineinzudrücken.

Der Stopfenkragen 12 ist mit einem umlaufenden Dichtungswulst 15 versehen. In das Stopfenteil 11 ist ein Steuerkanal 16 eingearbeitet. Zwischen Stopfenteil 11 und Dichtungswulst 15 ergibt sich daher eine Querschnittsfläche 17 des Steuerkanals 16. Die Größe der Querschnittsfläche 17 wirkt sich auf das Funktionsverhalten des Dichtungsventils 10 aus. Durch die definierte Strömungsführung eines Fluids mit Überdruck ist ein Dichtungsbereich 17' zielgerichtet druckbeaufschlagbar.

Weiterhin ist in der Figur angedeutet, daß auf der dem Behälter abgewandten Oberseite des Stopfenteils 11 ein Federelement 18 angeformt ist.

In der **Fig. 2** ist dargestellt, daß das Dichtungsventil 10 auf Teile eines Behälterstutzens 19 aufgesteckt ist. Das Stopfenteil 11 besitzt an seiner einem Behälterinnenraum 20 zugewandten Unterseite 21 zur Außenumfangsfläche 14 hin Schrägflächen 13. Wenn das Stopfenteil 11 bezüglich des Innendurchmessers und des Behälterstutzens 19 mit einem Übermaß gefertigt ist, so ermöglichen es die Schrägflächen 13 dennoch, das Stopfenteil 11 in die Behälteröffnung leicht einzuschieben.

Im Bereich der Außenumfangsfläche 14 des Stopfenteils 11 und einer Behälterstutzeninnenseite 22 befindet sich ein Steuerkanal 16. Der Steuerkanal 16 dient einer definierten Strömungsführung von Fluiden aus dem Behälterinnenraum 20 zu einer Dichtkante 23. Der Steuerkanal 16 verläuft von der Unterseite 21 des Stopfenteils 11 zunächst in Richtung der Längsachse 24 des Dichtungsventils 10. Im Bereich der Dichtkante 23, die auf einem Behälterrand 25 aufliegt, setzt sich der Steuerkanal 16 in radialer Richtung 26 fort. Fluide können, wie durch die Pfeile 27, 28 und 26 angedeutet ist, eine definierte Stelle der Dichtungskante 23 druckbeaufschlagen, da der Steuerkanal 16 durch einen Steuerkanalabschnitt 29 um die Behälteröffnung herum geführt ist.

Wenn eine Dichtfläche 30 mit einem bestimmten Druck beaufschlagt wird, so löst sich die Dichtkante 23 von dem Behälterrand 25. Fluide können aus dem Innenraum über den Steuerkanal 16 nach außen gelangen. Sobald sich der Druck des Fluids im Behälterinnenraum 20 abgebaut hat, läßt die Beaufschlagung der Dichtfläche 30 nach, so daß die Dichtkante 23 wieder auf dem Behälterrand 25 dichtend anliegen kann.

Diese Funktionsweise des Dichtungsventils 10 wird noch dadurch unterstützt, daß zwischen einer Oberseite 31 des Stopfenteils 11 und einer nicht gezeigten Batterieabschlußplatte ein Federelement 18 vorgesehen ist. Das Federelement 18 überbrückt den Zwischenraum zwischen Stopfenteil 11 und Batterieabschlußplatte. Insbesondere können Toleranzschwankungen des Abstands zwischen Batterieabschlußplatte und Oberseite 31 des Stopfenteils 11 ausgeglichen werden. Das Federelement 18 ist an dem Dichtungsventil 10 zentral bzw. symmetrisch angeordnet. Aus diesem Grund kann eine Krafteinleitung durch Belastung des Federelements 18 gleichmäßig auf den Stopfenkragen 12 und den Dichtungswulst 15 weitergeleitet werden.

Das Dichtungsventil 10 weist lediglich einen Steuerkanal 16 auf, der eine Soll-Entgasungsstelle für Fluide des Behälterinnenraums 20 bildet. Je nach Verwendungszweck können aber auch mehrere derartige Steuerkanäle 16 in beliebiger Anzahl und Anordnung vorgesehen sein. Ebenso kann auch die Querschnittsform des Stopfenteils 11 anstelle der kreisförmigen Form einen anderen geometrischen Querschnitt besitzen.

Ein Dichtungsventil 10 aus gummielastischem Material für Behälteröffnungen weist einen Stopfenteil 11 auf, das in die Behälteröffnung bis zu einem das Stopfenteil 11 in radialer Richtung 26 überragenden Stopfenkragen 12 einführbar ist. An dem Stopfenteil 11 ist mindestens ein Steuerkanal 16 ausgebildet, der sich von einem dem Behälterinnenraum 20 zugewandten Ende des Stopfenteils 11 in Richtung der Längsachse 24 des Dichtungsventils 10 erstreckt. An den Stopfenkragen 11 ist ein Dichtungswulst 15 angeformt, der auf einen die Behälteröffnung umschließenden Behälterrand 25 dichtend auflegbar ist. Der Stopfenkragen 12 weist einen Steuerkanalabschnitt 29 auf, der quer zu dem Steuerkanal 16 des Stopfenteils 11 verläuft und diesen Steuerkanal 16 bis zu dem Dichtungswulst 15 fortsetzt. Ein sicheres Entgasen ist bei gleichzeitiger Dichtheit gegen Austreten der Batterieflüssigkeit gewährleistet. Es wird weiterhin eine kostengünstige Herstellung bei großer Ausbeute erreicht.

## Patentansprüche

1. Dichtungsventil (10) aus gummielastischem Material für Behälteröffnungen, mit einem Stopfenteil (11), das in die Behälteröffnung bis zu einem das Stopfenteil (11) in radialer Richtung (26) überragenden Stopfenkragen (12) einführbar ist, wobei an dem Stopfenteil (11) mindestens ein Steuerkanal (16) ausgebildet ist, der sich von einer Unterseite (21) des Stopfenteils (11) in Richtung der Längsachse (24) des Dichtungsventils (10) bis zum Stopfenkragen (12) erstreckt, **dadurch gekennzeichnet, daß** an den Stopfenkragen (11) ein Dichtungswulst (15) angeformt ist, der auf einen die Behälteröffnung umschließenden Behälterrand (25) dichtend auflegbar ist, und daß der Stopfenkragen (12) einen Steuerkanalabschnitt (29) aufweist, der quer zu dem Steuerkanal (16) des Stopfenteils (11) verläuft und diesen Steuerkanal (16) bis zu dem Dichtungswulst (15) fortsetzt.

2. Dichtungsventil nach Anspruch 1, **dadurch gekennzeichnet, daß** der Dichtungswulst (15) mindestens eine ausgeprägte Dichtungskante (23) aufweist.

3. Dichtungsventil nach Anspruch 1 oder 2, **dadurch gekennzeichnet, daß** an der dem Behälter (19) abgewandten Außenoberfläche (31) des Stopfenteils (11) ein Federelement (18) vorgesehen ist.

4. Dichtungsventil nach Anspruch 3, **dadurch gekennzeichnet, daß** das Federelement (18) aus einem gummielastischen Material besteht und/oder einstückig an dem Stopfenteil (11) angeformt ist.

5. Dichtungsventil nach Anspruch 3, **dadurch gekennzeichnet, daß** als Federelement (18) eine Schraubenfeder verwendbar ist.

6. Dichtungsventil nach einem der vorhergehenden Ansprüche, **dadurch gekennzeichnet, daß** an der Außenumrangsfläche (14) des Stopfenteils (11) vorstehende Noppen vorgesehen sind.

## Claims

1. Sealing valve (10) made from rubber elastic material for container openings, with a stopper member (11) which can be introduced into the container opening up to a stopper collar (12) which projects in a radial direction (26) beyond the stopper member (11), wherein at least one control channel (16) is fashioned on the stopper member (11) and extends in a direction of the longitudinal axis (24) of the sealing valve (10) from a lower side (21) of the stopper member (11) up to the stopper collar (12),
**characterized in that**
a sealing lip (15) is formed on the stopper collar (11) which can seat in a sealing fashion on a container edge (25) surrounding the container opening and the stopper collar (12) has a control channel section (29) transverse to the control channel (16) of the stopper member (11) which extends this control channel (16) up to the sealing lip (15).

2. Sealing valve according to claim 1, **characterized in that** the sealing lip (15) has at least one prominent sealing edge (23).

3. Sealing valve according to claim 1 or 2, **characterized in that** a resilient element (18) is provided for on the outer surface (31) of the stopper member (11) facing away from the container (19).

4. Sealing valve according to claim 3, **characterized in that** the resilient element (18) is made from a rubber elastic material and/or is integrally formed onto the stopper member (11).

5. Sealing valve according to claim 3, **characterized in that** a helical spring can be utilized as a resilient element (18).

6. Sealing valve according to any one of the preceding claims, **characterized in that** protruding nubs are provided for on the outer peripheral surface (14) of the stopper member (11).

## Revendications

1. Clapet d'étanchéité (10) en matériau présentant l'élasticité du caoutchouc, destiné à des ouvertures de réservoir, comprenant une partie formant bouchon (11) susceptible d'être introduite dans l'ouverture d'un réservoir jusqu'à une collerette de bouchon (12) qui dépasse depuis la partie de bouchon (11) en direction radiale (26), au moins un canal de commande (16) étant réalisé au niveau de la partie de bouchon (11) et s'étendant depuis une face inférieure (21) de la partie de bouchon (11) en direction de l'axe longitudinal (24) du clapet d'étanchéité (10) jusqu'à la collerette de bouchon (12), **caractérisé en ce qu'**un bourrelet d'étanchéité (15) est conformé sur la collerette de bouchon (11), ledit bourrelet pouvant s'appliquer avec étanchement sur une bordure de réservoir (25) qui entoure l'ouverture de réservoir, et **en ce que** la collerette de bouchon (12) comporte un tronçon (29) de canal de commande, qui s'étend perpendiculairement au canal de commande (16) de la partie de bouchon (11), et qui prolonge ce canal de commande (16) jusqu'au bourrelet d'étanchéité (15).

2. Clapet d'étanchéité selon la revendication 1, **caractérisé en ce que** le bourrelet d'étanchéité (15) présente au moins une arête d'étanchement marquée (23).

3. Clapet d'étanchéité selon l'une ou l'autre des revendications 1 et 2, **caractérisé en ce qu'**il est prévu un élément de ressort (18) sur la surface extérieure (31), détournée du réservoir (19), de la partie de bouchon (11).

4. Clapet étanchéité selon la revendication 3, **caractérisé en ce que** l'élément de ressort (18) est réalisé en matériau présentant l'élasticicé du caoutchouc et/ou **en ce qu'**il est conformé d'une seule pièce sur la partie de bouchon (11).

5. Clapet d'étanchéité selon la revendication 3, **caractérisé en ce que** l'on utilise un ressort hélicoïdal à titre d'élément de ressort (18).

6. Clapet d'étanchéité selon l'une des revendications précédentes, **caractérisé en ce qu'**il est prévu des boutons qui dépassent de la surface périphérique extérieure (14) de la partie de bouchon (11).
